# EUROPÄISCHE PATENTSCHRIFT

(11) **EP 0 909 230 B1**
(45) Veröffentlichungstag und Bekanntmachung des Hinweises auf die Patenterteilung: **21.03.2001**
(21) Anmeldenummer: 98922730.1
(22) Anmeldetag: 17.04.1998
(51) Int. Cl.: B23C 5/00

(54) **WERKZEUGMASCHINE ZUR BEARBEITUNG VON WERKSTÜCKHOHLRÄUMEN**
MACHINE TOOL FOR MACHINING CAVITIES IN WORKPIECES
MACHINE-OUTIL POUR USINER DES CAVITES DE PIECES

(30) Priorität: 19.04.1997 DE 19716491
(43) Veröffentlichungstag der Anmeldung: 21.04.1999
(73) Patentinhaber: CHIRON-WERKE GMBH & CO. KG, 78532 Tuttlingen (DE)
(72) Erfinder: DEUFEL, Karl, D-78600 Kolbingen (DE)
(74) Vertreter: Otten, Hajo, Dr.-Ing.
(86) Internationale Anmeldenummer: EP9802246
(87) Internationale Veröffentlichungsnummer: WO9847655

(56) Entgegenhaltungen:
- DE-A- 3 021 176
- US-A- 4 923 343
- PATENT ABSTRACTS OF JAPAN vol. 011, no. 296 (M-627), 25. September 1987 & JP 62 088530 A (TOSHIBA CORP;OTHERS: 01), 23. April 1987

## Beschreibung

Die vorliegende Erfindung betrifft eine Werkzeugmaschine mit einer Spindel zur Aufnahme eines Bearbeitungswerkzeuges für die Bearbeitung eines Werkstückes und mit einer Vorrichtung zum Einspannen des Werkstückes.

Derartige Werkzeugmaschinen sind aus dem Stand der Technik allgemein bekannt.

In der Regel weisen derartige Werkzeugmaschinen Werkzeugwechselvorrichtungen auf, mit denen an genormten Werkzeughaltern befestigte Werkzeuge zwischen einer Werkzeugaufnahme in der Spindel und einer Magazinposition überführbar sind. Auf diese Weise können bei einer einzigen Werkzeugaufspannung nacheinander mit verschiedenen Werkzeugen unterschiedliche Bearbeitungsvorgänge an dem aufgespannten Werkstück durchgeführt werden, bevor es gegen ein zu bearbeitendes Werkstück ausgetauscht wird.

Bei derartigen Werkzeugmaschinen wird ein sehr schneller Werkzeugwechsel angestrebt, um die für die in einer Aufspannung erfolgende Bearbeitung erforderliche Zeit möglichst gering zu halten, so daß der Werkstückdurchsatz der Werkzeugmaschine groß ist.

Eine Grundvoraussetzung für die Bearbeitung eines Werkstückes mit einem in der Spindel eingespannten Werkzeug ist es natürlich, daß die an dem Werkstück zu bearbeitende Fläche für das Werkzeug auch zugänglich ist. In diesem Zusammenhang gibt es Probleme bei innen hohlen, z.B. glockenförmigen Werkstücken, deren Innenraum durch ein Werkzeug bearbeitet werden muß, das - sei es aus konstruktiven oder aufspannungstechnischen Gründen - nicht von oben in den Werkstückhohlraum eingeführt werden kann. Bei einem glockenförmigen Werkstück ist es z.B. vorstellbar, daß es aus sonstigen bearbeitungstechnischen Gründen mit der großen Öffnung nach unten auf der Vorrichtung aufgespannt wird, wobei nach oben hin nur eine kleine Öffnung vorhanden ist, durch die ein Fräser nicht in den Werkstückhohlraum eintauchen kann, um die dort erforderliche Bearbeitung vorzunehmen. Damit diese Bearbeitung im Inneren des Werkstückes erfolgen kann, muß das Werkstück folglich umgespannt werden, wodurch wertvolle Bearbeitungszeit verlorengeht.

Als Alternative zu einem derartigen Umspannen des Werkstückes ist es auch bekannt, ein aus Adapterwerkzeug und Bearbeitungswerkzeug bestehendes, zweiteiliges Werkzeug zu verwenden, wie es z.B. von der Firma Bilz, 73716 Esslingen, unter den Bestellnummern FH111992 sowie SS111991 zu beziehen ist.

Das Adapterwerkzeug weist einen relativ dünnen, langen Schaft auf, der an dem genormten Werkzeughalter befestigt ist und an seinem freien Ende eine Art Bajonettverschluß aufweist. Dieses Adapterwerkzeug wird jetzt durch eine nach oben weisende Öffnung in den Werkstückhohlraum eingeführt. In dem Werkstück muß jetzt eine große seitliche Öffnung vorgesehen sein, durch die eine Bedienungsperson das Bearbeitungswerkzeug, also z.B. den Fräser, seitlich in den Werkstückhohlraum einbringen und dort auf das freie Ende des Adapterwerkzeuges aufschieben und mit diesem durch Verdrehen verriegeln kann. Zu diesem Zweck weist das Bearbeitungswerkzeug eine Haltebohrung mit Stiften auf, die nach Art eines Bajonettverschlusses mit dem Adapterwerkzeug zusammenwirken.

Auf diese Weise wird erreicht, daß der Werkstückhohlraum mit einem Bearbeitungswerkzeug bearbeitet werden kann, das nicht durch die kleine obere Öffnung hätte eingebracht werden können, wobei diese Öffnung jedoch groß genug ist, um den Schaft des Adapterwerkzeuges aufzunehmen.

Hierdurch wird das ansonsten erforderliche Umspannen verhindert, wobei jetzt auch Werkstückhohlräume von Werkstücken bearbeitet werden können, die auch auf ihrer Unterseite keine entsprechend große Öffnung aufweisen, so daß auch ein Umspannen die Bearbeitung des Werkstückhohlraumes nicht ermöglichen würde.

Andererseits ist es aber erforderlich, daß das Werkstück eine relativ große seitliche Öffnung aufweist, durch die nicht nur das Bearbeitungswerkzeug in den Werkstückhohlraum eingebracht werden muß, sondern die auch noch zusätzlich genügend Platz für die Hand der Bedienungsperson lassen muß, die in dem Werkstückhohlraum das Bearbeitungswerkzeug mit dem Adapterwerkzeug verriegeln muß.

Derartige große seitliche Öffnungen können Stabilitätsprobleme bei dem Werkstück hervorrufen, so daß sie so klein wie möglich sein sollten. Andererseits sollten diese seitlichen Öffnungen aber so groß wie möglich sein, damit eine Verletzungsgefahr für die Bedienungsperson ausgeschlossen wird und ferner das schwierige Einfädeln des Adapterwerkzeuges in das Bearbeitungswerkzeug möglichst einfach, schnell und vor allem sicher erfolgen kann.

Es versteht sich, daß derartige Manipulationen mit Adapterwerkzeug und Bearbeitungswerkzeug den normalen Bearbeitungsgang einer ansonsten vollautomatischen Werkzeugmaschine stören, sie reduzieren den Werkstückdurchsatz bei der Bearbeitung derartiger Werkstücke erheblich, wobei sie darüber hinaus ein Sicherheitsrisiko für die Bedienungsperson darstellen.

Vor diesem Hintergrund ist es Aufgabe der vorliegenden Erfindung, bei konstruktiv einfachem Aufbau einer Werkzeugmaschine eine schnellere Bearbeitung von Werkstückhohlräumen sowie ein schnelles und sicheres Wechseln eines "zweiteiligen" Werkzeuges zu ermöglichen, ohne daß das Werkstück umgespannt werden muß oder zu große seitliche Öffnungen vorzusehen sind.

Bei der eingangs erwähnten Werkzeugmaschine wird diese Aufgabe erfindungsgemäß dadurch gelöst, daß eine automatische Wechselvorrichtung für das Bearbeitungswerkzeug vorgesehen ist, die eine Greiferhand aufweist, die das Bearbeitungswerkzeug hält und es seitlich in einen Werkstückhohlraum so einbringt, daß es dort mit einem von der Spindel getragenen Adapterwerkzeug automatisch kuppelbar ist.

Die der Erfindung zugrundeliegende Aufgabe wird auf diese Weise vollkommen gelöst.

Die Erfinder der vorliegenden Anmeldung haben nämlich erkannt, daß zunächst einmal bei einer Greiferhand eine erheblich schmalere seitliche Öffnung als bei Manipulationen von Hand erforderlich ist. Das zweiteilige Werkzeug wird jetzt sozusagen zum Teil über die Spindel von oben und zum Teil durch die Wechselvorrichtung von der Seite in den Werkstückhohlraum eingebracht, was wegen der numerischen Steuerung auf äußerst reproduzierbare und lagegenaue Weise sowie erheblich betriebssicherer erfolgen kann, als von Hand. Das Kuppeln des Bearbeitungswerkzeugs mit dem Adapterwerkzeug kann z.B. dadurch erfolgen, daß das Bearbeitungswerkzeug durch die oder in der Greiferhand verdreht wird, so daß es sozusagen auf das Adapterwerkzeug aufgeschraubt wird, wodurch der Bajonettverschluß verriegelt. Andererseits kann die Greiferhand auch Querbolzen oder Stifte verschieben, durch die eine Verriegelung des Bearbeitungswerkzeuges an dem Schaft des Adapterwerkzeuges erfolgt.

Allgemein ist bei der neuen Werkzeugmaschine also von Vorteil, daß ohne große seitliche Öffnungen in dem Werkstück Werkstückhohlräume jetzt vollkommen automatisiert bearbeitet werden können, wobei zum Werkzeugwechsel die Spindel und die neue Wechselvorrichtung zusammenwirken.

Obwohl die neue Wechselvorrichtung einen erheblichen konstruktiven Aufwand erfordert und merkliche Kosten verursacht, wird dies erstaunlicherweise durch die erzielbaren strukturellen Vorteile bei dem zu bearbeitenden Werkstück sowie durch die erheblich gesteigerte Bearbeitungsgeschwindigkeit mehr als kompensiert. Als weiterer wichtiger Vorteil sei noch erwähnt, daß die Verletzungsgefahr für das Bedienungspersonal ebenfalls deutlich verringert wird.

Dabei ist es bevorzugt, wenn die Greiferhand zwei Backen aufweist, die das Bearbeitungswerkzeug in axialer Richtung halten.

Hier ist von Vorteil, daß die Greiferhand sehr schmal sein kann, da die beiden Backen z.B. in zwei nach außen offenen Nuten des Bearbeitungswerkzeuges liegen können. Das bedeutet jedoch, daß nur wenig mehr seitlicher Raum beim Einführen des Bearbeitungswerkzeuges durch die seitliche Öffnung in den Werkzeughohlraum erforderlich ist, als es der Breite des Bearbeitungswerkzeuges entspricht. Diese Maßnahme ist also von strukturellem Vorteil für das zu bearbeitende Werkstück.

Dabei ist es weiter bevorzugt, wenn die Greiferhand überdrückbare Rastmittel zum Halten des Bearbeitungswerkzeuges aufweist, wobei die Rastmittel vorzugsweise zwei Kugelrastungen umfassen, die einander gegenüberliegend innen an den Backen angeordnet sind.

Hier ist von Vorteil, daß die Backen zum Ergreifen bzw. Freigeben des Bearbeitungswerkzeuges keine Öffnungsbewegung durchführen müssen, was weiter Platz im Werkstück bzw. in der seitlichen Öffnung spart. Ferner ist diese Maßnahme konstruktiv von Vorteil, es sind lediglich zwei einander gegenüberstehende starre Backen an der Greiferhand vorzusehen, zwischen denen das Bearbeitungswerkzeug eingeschoben wird, so daß es in axialer Richtung und drehfest durch die offenen Nuten gehalten und durch die Rastmittel am Herausfallen aus der Greiferhand gehindert wird.

Ferner ist es bevorzugt, wenn an der Greiferhand ein Sensor angeordnet ist, der erkennt, ob das Bearbeitungswerkzeug korrekt in der Greiferhand aufgenommen ist.

Diese Maßnahme ist im Hinblick auf einen sicheren Werkzeugwechsel von Vorteil, denn sie vermeidet Fehler sowohl beim Ein- als auch beim Auskuppeln. Wenn der Sensor an eine Steuerung meldet, daß das Bearbeitungswerkzeug richtig in der Greiferhand sitzt, kann z.B. durch Verdrehen der Spindel das Adapterwerkzeug ausgekuppelt werden. Nachdem die Spindel das Adapterwerkzeug dann zurückgezogen hat, kann die Greiferhand aus dem Werkstückhohlraum herausgefahren werden, wobei durch den Sensor überwacht wird, ob das Bearbeitungswerkzeug während dieser Operationen sicher in der Greiferhand verbleibt. Wenn andererseits das Adapterwerkzeug eingekuppelt wurde, so wird beim Zurückziehen der Greiferhand aus dem Werkstückhohlraum das Bearbeitungswerkzeug durch Überdrücken der Rastmittel aus der Greiferhand entfernt, was ebenfalls durch den Sensor gemeldet wird. Verbleibt das Bearbeitungswerkzeug beim Zurückziehen der Greiferhand in dieser, so liegt eine Fehlfunktion vor, die ebenfalls gemeldet wird.

Allgemein ist es bevorzugt, wenn die Greiferhand an einem Haltearm angeordnet ist, der die aus dem Werkstück zurückgezogene Greiferhand aus dem Bereich der Vorrichtung nach oben schwenkt.

Diese Maßnahme ist konstruktiv von Vorteil, in ihrer Ruheposition befindet sich die Greiferhand hinter oder neben dem Werkstück sowie oberhalb der Vorrichtung, so daß sie dort die übliche Bearbeitung nicht stört. Das bedeutet jedoch, daß die neue Wechselvorrichtung auch bei bestehenden Werkzeugmaschinen nachgerüstet werden kann.

Dabei ist es bevorzugt, wenn der Haltearm an einem Hub-Schwenkantrieb angeordnet ist, der den Haltearm während eines Abschnittes seines Hubes zusätzlich zwangsgeführt nach oben schwenkt.

Diese Maßnahme ist konstruktiv von Vorteil, die Hubbewegung geht während eines Abschnittes des Hubes zwangsgeführt in eine Hub-Schwenkbewegung über. Das bedeutet jedoch, daß steuerungstechnisch lediglich die Hubbewegung initiiert werden muß, die Schwenkbewegung erfolgt automatisch über denselben Antrieb.

Dabei ist es dann bevorzugt, wenn an dem Hub-Schwenkantrieb zumindest ein Sensor zur Überwachung der Hubendlage und ein Sensor zur Überwachung der Schwenkendlage vorgesehen ist.

Hier ist von Vorteil, daß sowohl die Hubendlage, in der sich die Greiferhand im Werkstückhohlraum befindet, als auch die Schwenkendlage, in der die Greiferhand zurückgezogen und hochgeschwenkt ist, überwacht wird, was sicherheitstechnische Vorteile bringt. Ferner ist von Vorteil, daß die Ablaufsteuerung schneller erfolgen kann, denn es sind keine Wartezeiten vorzugeben, nach denen die Steuerung erst den nächsten Ablaufschritt initiieren kann, vielmehr wird das Erreichen der jeweiligen Endlage gemeldet, woraufhin sofort die nächste Operation begonnen werden kann.

Dabei ist es weiter bevorzugt, wenn der Hub-Schwenkantrieb einen mit dem Haltearm verbundenen Kolben umfaßt, der drehbar und verschiebbar in einem Zylinder sitzt, wobei der Kolben auf seiner Umfangsfläche eine Steuerkulisse in Form einer nach außen offenen Nut aufweist, in die ein Nutenstein eingreift, der mit dem Zylinder verbunden ist.

Auch diese Maßnahme ist konstruktiv von Vorteil, durch die Steuerkulisse und den Nutenstein wird auf denkbar einfache Weise eine Umsetzung der Hubbewegung in eine Hub-Schwenkbewegung erzielt.

Dabei ist es weiter von Vorteil, wenn auf der Umfangsfläche des Kolbens zwei axial und radial zueinander versetzte Ausfräsungen angeordnet sind, von denen eine in der Hubendlage und die andere in der Schwenkendlage mit einem zugeordneten Sensor zusammenwirkt.

Auch diese Maßnahme ist konstruktiv von Vorteil, durch die beiden Sensoren wird sowohl der Hub als auch die Schwenkbewegung überwacht, wozu lediglich zwei Ausfräsungen auf der Umfangsfläche des Kolbens vorzusehen sind, die zueinander entsprechende axiale und radiale Abstände aufweisen. Da diese Ausfräsungen auf der Umfangsfläche beliebig angeordnet werden können, können auch die zugeordneten Sensoren an konstruktiv günstigen Positionen angeordnet werden.

Das auf der neuen Werkzeugmaschine durchgeführte Verfahren zum automatischen Wechseln eines zweiteiligen Werkzeuges umfaßt also allgemein das Einführen eines Bearbeitungswerkzeuges in einen Werkstückhohlraum mittels einer automatischen Wechselvorrichtung, wobei durch die Spindel ein Adapterwerkzeug in den Werkstückhohlraum eingeführt wird. Durch Verdrehen der Spindel und/oder des Bearbeitungswerkzeuges wird dieses dann mit dem Adapterwerkzeug gekuppelt. Daraufhin zieht die Wechselvorrichtung ihre Greiferhand, die bis dahin das Bearbeitungswerkzeug gehalten hat, aus dem Werkstückhohlraum zurück, was vorzugsweise durch einen an der Greiferhand angeordneten Sensor überwacht wird. Die Freigabe des Bearbeitungswerkzeuges aus der Greiferhand erfolgt bei diesem Zurückziehen der Greiferhand vorzugsweise durch Überdrücken von Rastmitteln, die zwischen der Greiferhand und dem Bearbeitungswerkzeug wirken.

Zum Entnehmen des Beareitungswerkzeuges aus dem Werkstückhohlraum wird die Greiferhand wieder in den Werkstückhohlraum eingefahren, wobei sie mit ihren Backen automatisch das Bearbeitungswerkstück ergreift, indem die Rastmittel wieder überdrückt werden. Das korrekte Erfassen des Bearbeitungswerkzeuges durch die Greiferhand wird wieder durch den Sensor erfaßt und gemeldet.

Darüber hinaus kann ein weiterer Sensor vorgesehen sein, der diese Hubendlage der Greiferhand überwacht und meldet. Durch zu der Einkuppelrichtung gegensinniges relatives Verdrehen zwischen Spindel und Adapterwerkzeug wird jetzt ausgekuppelt, woraufhin zunächst die Spindel das Adapterwerkzeug aus dem Werkstückhohlraum entfernt. Daraufhin zieht die Greiferhand das Bearbeitungswerkzeug aus dem Werkstückhohlraum zurück und fährt in ihre Schwenkendlage, was vorzugsweise ebenfalls durch einen Sensor überwacht und gemeldet wird.

Zu beachten ist bei diesem Verfahren, daß die relative Drehrichtung beim Einkuppeln des Adapterwerkzeuges in das Bearbeitungswerkzeug gleich der Drehrichtung ist, mit der das Bearbeitungswerkzeug das Werkstück bearbeitet. Dadurch wird sichergestellt, daß sich die Verriegelung zwischen Adapterwerkzeug und Bearbeitungswerkzeug während der Werkstückbearbeitung nicht unbeabsichtigt löst.

Weitere Merkmale und Vorteile ergeben sich aus der Beschreibung und der beigefügten Zeichnung.

Ein Ausführungsbeispiel der Erfindung ist in der beigefügten Zeichnung dargestellt und wird in der nachfolgenden Beschreibung näher erläutert. Es zeigen:
- Fig. 1: eine schematische Vorderansicht einer Werkzeugmaschine, bei der ein zweiteiliges Werkzeug automatisch mit einer Wechselvorrichtung gewechselt werden kann;
- Fig. 2: eine Draufsicht auf die Wechselvorrichtung gemäß Fig. 1;
- Fig. 3: den Hub-Schwenkantrieb für die Wechselvorrichtung aus Fig. 2, im teilweise geschnittenen Längsschnitt;
- Fig. 4: eine Abwicklung der Steuerkulisse, die bei dem Hub-Schwenkantrieb aus Fig. 3 die zwangsgeführte Schwenkbewegung bewirkt; und
- Fig. 5: eine Darstellung wie Fig. 3, die jedoch die Anordnung der Sensoren und damit zusammenwirkenden Ausfräsungen zur Überwachung der Endlagen des Hub-Schwenkantriebes aus Fig. 2 zeigt.

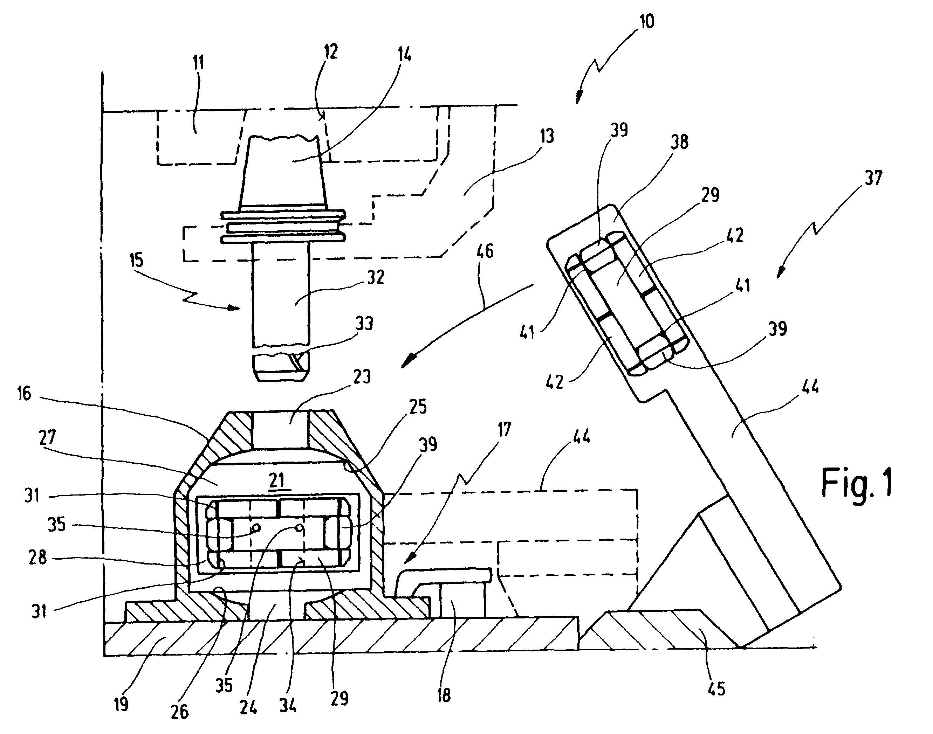

In Fig. 1 ist mit 10 sehr schematisch eine Werkzeugmaschine angedeutet, die eine bei 11 angedeutete Spindel umfaßt, in der eine bei 12 angedeutete Werkzeugaufnahme vorgesehen ist. Ferner weist die Werkzeugmaschine 10 einen schematisch gezeichneten Werkzeugwechsler 13 auf.

Der Werkzeugwechsler 13 hält einen standardisierten Werkzeughalter 14, der in die Werkzeugaufnahme 12 eingesetzt werden kann. An dem Werkzeughalter 14 ist ein Werkzeug 15 vorgesehen, das zur Bearbeitung eines Werkstückes 16 dient, das auf einer bei 17 angedeuteten Vorrichtung aufgespannt ist. Die Vorrichtung 17 umfaßt z.B. Spannpratzen, von denen eine bei 18 angedeutet ist, sowie eine wiegenplatte 19, auf der das Werkstück 16 aufliegt.

Das Werkstück 16 ist in Fig. 1 geschnitten dargestellt, so daß sein Werkstückhohlraum 21 zu erkennen ist, in den von oben eine Bohrung 23 sowie von unten eine Bohrung 24 hineinführt. Den Übergang zwischen Werkstückhohlraum 21 und Bohrung 23 bzw. 24 bildet eine Kante 25 bzw. 26, die zu bearbeiten ist. Weil die Durchmesser der Bohrungen 23 und 24 relativ gering sind, kann das für diese Bearbeitung erforderliche Werkzeug nicht durch die Bohrungen 23 oder 24 eingeführt werden.

Aus diesem Grund ist in einer mit 27 bezeichneten Rückwand des Werkstückes 16 eine Öffnung 28 vorgesehen, durch die von hinten ein Bearbeitungswerkzeug 29 in den Werkstückhohlraum 21 eingeführt werden kann. Dieses Bearbeitungswerkzeug 29 ist z.B. ein Fräser mit Schneidkanten, die bei 31 angedeutet sind.

Dem Bearbeitungswerkzeug 29 zugeordnet ist ein schaftartiges Adapterwerkzeug 32, so daß das Werkzeug 15 zur Bearbeitung des Werkstückhohlraumes 21 sozusagen ein zweiteiliges Werkzeug 15 aus Bearbeitungswerkzeug 29 sowie Adapterwerkzeug 32 ist.

Das Adapterwerkzeug 32 weist an seinem unteren freien Ende einen Bajonettverschluß 33 auf, der mit einer Haltebohrung 34 in dem Bearbeitungswerkzeug 29 zusammenwirkt, wozu dort Stifte 35 vorgesehen sind.

Während das Adapterwerkzeug 29 beim Stand der Technik von Hand durch die Öffnung 28 in den Werkstückhohlraum 21 eingeführt und dort von Hand mit dem Adapterwerkzeug 32 gekuppelt wird, weist die neue Werkzeugmaschine 10 hierzu erfindungsgemäß eine automatische Wechselvorrichtung 37 auf.

Die Wechselvorrichtung 37 umfaßt eine in Fig. 1 hochgeschwenkte Greiferhand 38, an der zwei feste Backen 39 vorgesehen sind, die in nach außen offene Nuten 41 des Bearbeitungswerkzeuges 29 eingreifen, wobei die Nutenwände durch Schneidteile 42 des Bearbeitungswerkzeuges 32 gebildet werden. Durch das Zusammenwirken von Backen 39 und Nuten 41 wird das Bearbeitungswerkzeug 32 axial und seitlich in der Greiferhand 38 gehalten, wobei es unverdrehbar ist.

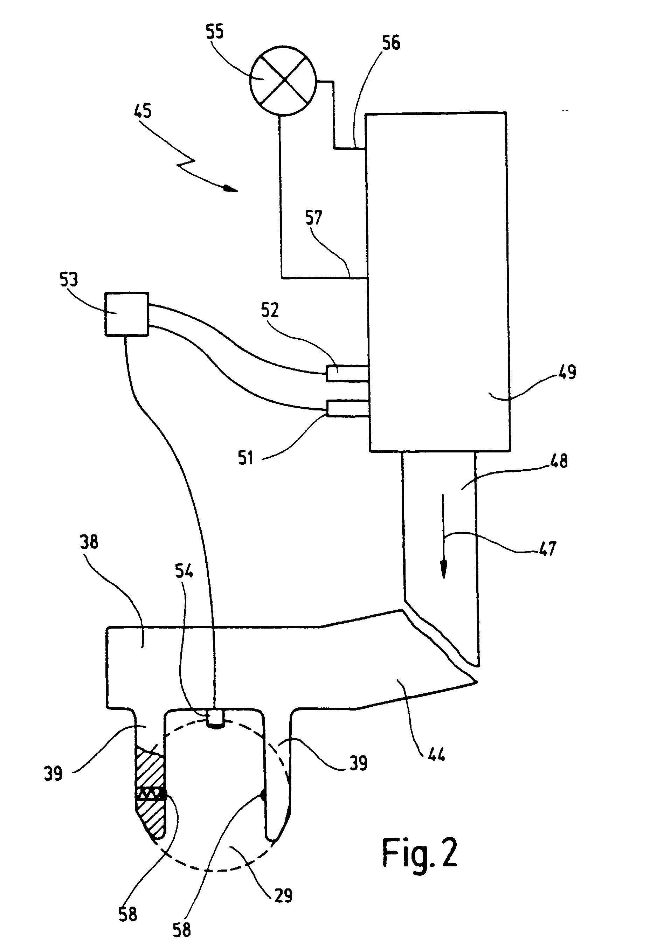

Die Greiferhand 38 ist an einem Haltearm 44 angeordnet, der wiederum an einem in Fig. 1 lediglich schematisch angedeuteten Hub-Schwenkantrieb 45 befestigt ist. In Fig. 2 ist eine Draufsicht auf den Hub-Schwenkantrieb 45 gezeigt.

Die Wirkungsweise dieses Hub-Schwenkantriebes ist derart, daß er zunächst die Greiferhand 38 in Richtung einer bei 46 in Fig. 1 angedeuteten Schwenkrichtung nach unten schwenkt, so daß sie auf gleicher Höhe mit der Öffnung 28 liegt. Daraufhin wird die Greiferhand 38 dann aus der Zeichnungsebene der Fig. 1 nach oben gefahren, was in Fig. 2 durch eine Hubrichtung 47 angedeutet ist. Mit anderen Worten, in ihrer in Fig. 1 gezeigten Schwenkendlage befindet sich die Greiferhand hinter dem Werkstück 16 sowie so weit oberhalb der Vorrichtung 17, daß sie die üblichen Bearbeitungen des Werkstückes 16 durch ein von der Spindel 11 aufgenommenes Werkzeug 15 sowie Kippbewegungen der Wiegenplatte 19 nicht behindert. Soll jetzt der Werkstückhohlraum 21 bearbeitet werden, wird durch den Werkzeugwechsler 13 das Adapterwerkzeug 32 in die Spindel 11 eingewechselt. Gleichzeitig schwenkt der Hub-Schwenkantrieb 45 die das Bearbeitungswerkzeug 29 haltende Greiferhand 38 in Richtung des Pfeiles 46 in Fig. 1 nach unten hinter das Werkstück 16, woraufhin die Greiferhand 38 dann in Fig. 2 nach unten geschoben wird, so daß sie seitlich bzw. von hinten durch die Öffnung 28 in den Werkstückinnenraum 21 hineingelangt.

In Fig. 1 ist gestrichelt die Lage des Haltearmes 44 angedeutet ist, die dieser einnimmt, wenn sich die Greiferhand 39 in ihrer Hubendlage befindet, in der sie das Bearbeitungswerkzeug 29 im Werkstückhohlraum 21 hält.

Es ist in Fig. 1 zu erkennen, daß das Bearbeitungswerkzeug 29 seitlich nicht über die festen Backen 39 vorsteht, so daß also die Größe der Öffnung 28 lediglich durch die Abmaße des Bearbeitungswerkzeuges 29 vorgegeben ist. Jetzt fährt die Spindel 11 von oben das Adapterwerkzeug 32 durch die Öffnung 23 in den Werkstückhohlraum 21 ein, wobei es in die Haltebohrung 34 eingefädelt wird. Daraufhin verdreht die Spindel 11 das Adapterwerkzeug 32, so daß die Bajonettverriegelung einschnappt. Dabei wird ausgenutzt, daß das Bearbeitungswerkzeug 29 drehfest zwischen den Backen 39 gehalten wird. Nach dem erfolgten Einkuppeln wird die Greiferhand 38 zurückgezogen und in die Schwenkendlage gebracht, die in Fig. 1 gezeigt ist.

Zurückkehrend zu Fig. 2 ist dort zu erkennen, daß der Hub-Schwenkantrieb 45 einen mit dem Haltearm 44 verbundenen Kolben 48 sowie einen Zylinder 49 umfaßt, in dem der Kolben 48 auf noch zu beschreibende Weise längsverschieblich und verdrehbar angeordnet ist.

An dem Zylinder 49 sind zwei Sensoren 51 und 52 angeordnet, die mit einer Steuerung 53 verbunden sind. Gleichfalls ist ein Sensor 54 gezeigt, der an der Greiferhand 38 angeordnet ist und ebenfalls mit der Steuerung 53 verbunden ist. Weiterhin zeigt Fig. 2 eine Betätigungsvorrichtung 55, die über Anschlüsse 56 und 57 ein Druckmedium zu dem Zylinder 49 führt, wodurch bei entsprechender Beaufschlagung der Kolben 48 entweder vor- oder zurückgefahren wird.

Es sei noch erwähnt, daß der Sensor 51 zur Überwachung der in Fig. 2 gezeigten Hubendlage (in Fig. 1 gestrichelt angedeutet) und der Sensor 52 zur Überwachung der in Fig. 1 durchgezogen gezeigten Schwenkendlage dient. Der Sensor 54 dient dagegen der Überwachung der korrekten Lage des in Fig. 2 bei 29 lediglich angedeuteten Bearbeitungswerkzeuges zwischen den Backen 39.

In Fig. 2 ist weiter zu erkennen, daß an den Backen 39 zwei einander gegenüberliegende Kugelrastungen 58 vorgesehen sind, durch die das Bearbeitungswerkzeug 29 unverlierbar in der Greiferhand 38 gehalten wird.

In der in Fig. 1 gezeigten Schwenkendlage meldet also der Sensor 52, daß sich die Greiferhand 38 hinter dem Werkstück 16 und oberhalb der Vorrichtung 17 befindet, so daß die übliche Bearbeitung vorgenommen werden kann. Ferner meldet der Sensor 54, daß ein Bearbeitungswerkzeug 29 in der Greiferhand 38 aufgenommen ist.

Zum Einwechseln des "zweiteiligen" Werkzeuges 15 wird jetzt die Greiferhand 38 auf schon beschriebene Weise durch Schwenken und Verfahren in den Werkzeughohlraum 21 eingebracht, wobei das Erreichen der in Fig. 1 gestrichelt gezeigten Hubendlage durch den Sensor 51 gemeldet wird. Sobald diese Hubendlage erreicht ist, fährt die Spindel 11 das Adapterwerkzeug 32 in die Haltebohrung 34 ein und verdreht diese so, daß der Bajonettverschluß verrastet. Sobald dies geschehen ist, wird die Greiferhand 38 aus dem Werkstückhohlraum 21 zurückgezogen, wobei die Kugelrastungen 58 überdrückt werden, da das Bearbeitungswerkzeug 29 jetzt von dem Adapterwerkzeug 32 gehalten wird. Der Sensor 54 meldet, daß das Bearbeitungswerkzeug 29 die Greiferhand 38 verlassen hat. Erfolgt diese Meldung nicht, so liegt ein Fehler vor.

Sobald der Sensor 52 das Erreichen der Schwenkendlage meldet, kann die Bearbeitung beginnen.

Beim Auswechseln des Bearbeitungswerkzeuges 29 melden zunächst die Sensoren 51 und 54, daß die Greiferhand 38 wieder im Werkzeughohlraum 21 angekommen ist und daß ferner das Adapterwerkzeug 29 korrekt in der Greiferhand 38 aufgenommen wurde. Nach dem Auskuppeln durch entgegengesetztes Verdrehen der Spindel 11 werden dann zunächst das Adapterwerkzeug 32 und dann das Bearbeitungswerkzeug 29 zurückgezogen.

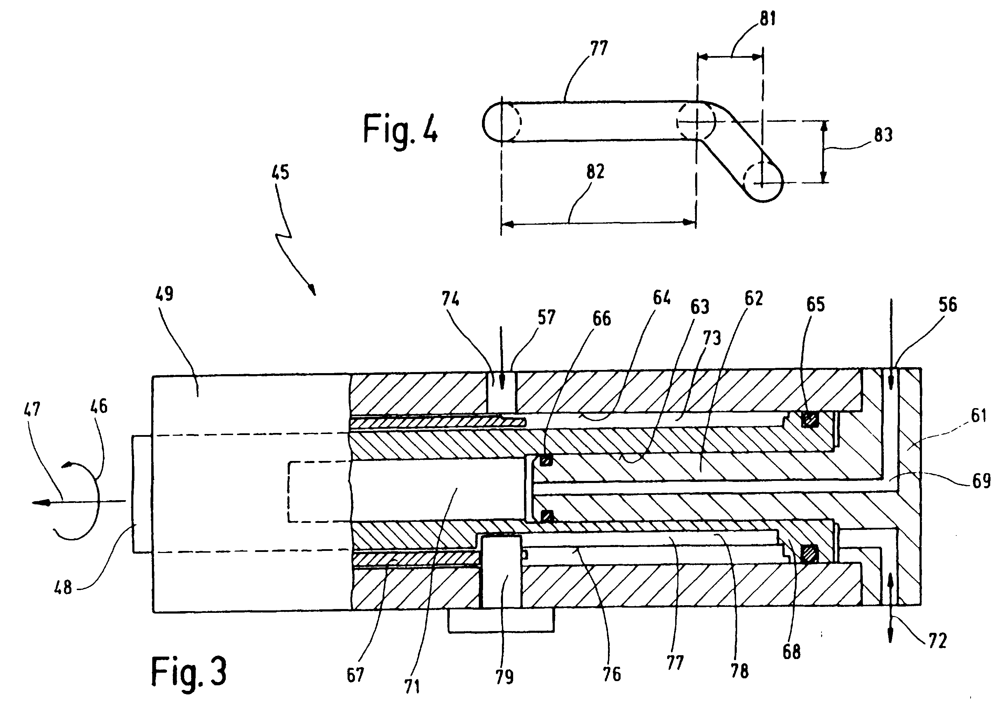

Anhand von Fig. 3 soll jetzt beschrieben werden, wie der Hub-Schwenkantrieb 45 die zwangsgeführte Hub-Schwenkbewegung 46, 47 bewirkt.

Zunächst ist zu erkennen, daß der Zylinder 49 durch ein Endstück 61 rechts abgeschlossen ist, das einen sich zentrisch durch den Zylinder 49 erstreckenden Zapfen 62 trägt, auf dem der Kolben 48 mit einer Führungsbohrung 63 verschieblich und verdrehbar geführt ist. Zur Abdichtung gegenüber einer Zylinderinnenwand 64 ist ein O-Ring 65 vorgesehen, während ein weiterer 0-Ring 66 zur Abdichtung zwischen dem Zapfen 62 und der Führungsbohrung 63 dient. Ferner ist in dem Zylinder 49 eine Anschlaghülse 67 angedeutet, die in geeigneter Weise am linken Ende des Zylinders 49 befestigt ist.

Fig. 3 zeigt weiter, daß der Kolben 49 im Bereich des O-Ringes 65 einen Flansch 68 aufweist.

In dem Endstück 61 ist eine Bohrung 69, die sich durch den Zapfen 62 erstreckt und auf einen Druckraum 71 im Inneren des Kolbens 48 zuweist. Ferner ist eine Be-/Entlüftungsbohrung 72 vorgesehen, die in dem Endstück 61 liegt und auf die Rückseite des Flansches 68 führt.

Wird jetzt Druckmedium durch den Anschluß 56 in die Bohrung 69 geleitet, so gelangt dieses in den Druckraum 71 und schiebt den Kolben 48 in Fig. 3 nach links, bis der Flansch 68 in Anlage mit der Anschlaghülse 67 gelangt. Die erforderliche Entlüftung auf der Rückseite des Flansches 68 erfolgt über die Be-/Entlüftungsbohrung 72.

Die Greiferhand 38 befindet sich jetzt in der in Fig. 2 gezeigten Hubendlage.

Zum Zurückfahren der Greiferhand 38 wird über den Anschluß 57 und durch eine Bohrung 74 Druckmedium in einen Ringraum 73 zwischen Kolben 48 und Zylinderinnenwand 64 geleitet. Dieses Druckmedium drückt über den Flansch 68 den Kolben 48 in Fig. 3 nach rechts, bis er wieder die in Fig. 3 gezeigte Lage erreicht, wo der Flansch 68 rechts auf dem Endstück 61 aufliegt.

Dieser Hub des Kolbens 48 wird jetzt in eine zwangsgeführte Hub-Schwenkbewegung umgesetzt. Hierzu weist der Kolben 48 auf seiner Umfangsfläche 76 eine Steuerkulisse 77 in Form einer nach außen offenen Nut 78 auf, in die ein fest mit dem Zylinder 49 verbundenen Nutenstein 79 eingreift.

In Fig. 4 ist eine Abwicklung der Steuerkulisse 77 gezeigt.

Es ist zu erkennen, daß der Hub 47 einen ersten Hubabschnitt 81 aufweist, für den die Steuerkulisse 47 sich sowohl radial als auch axial auf der Umfangsfläche 76 erstreckt. Daran schließt sich ein zweiter Hubabschnitt 82 an, für den die Steuerkulisse 77 lediglich in axialer Richtung auf der Umfangsfläche 76 verläuft. Dies bedeutet jedoch, daß während des ersten Hubabschnittes 81 der Kolben 48 sowohl eine Hubbewegung als auch eine bei 83 angedeutete Drehbewegung macht.

Beim Verlassen seiner Schwenkendlage, wie sie in Fig. 1 gezeigt ist, vollführt die Greiferhand 38 also zunächst eine kombinierte Hub- und Schwenkbewegung 81, 83, woraufhin sich dann eine reine Hubbewegung 82 anschließt.

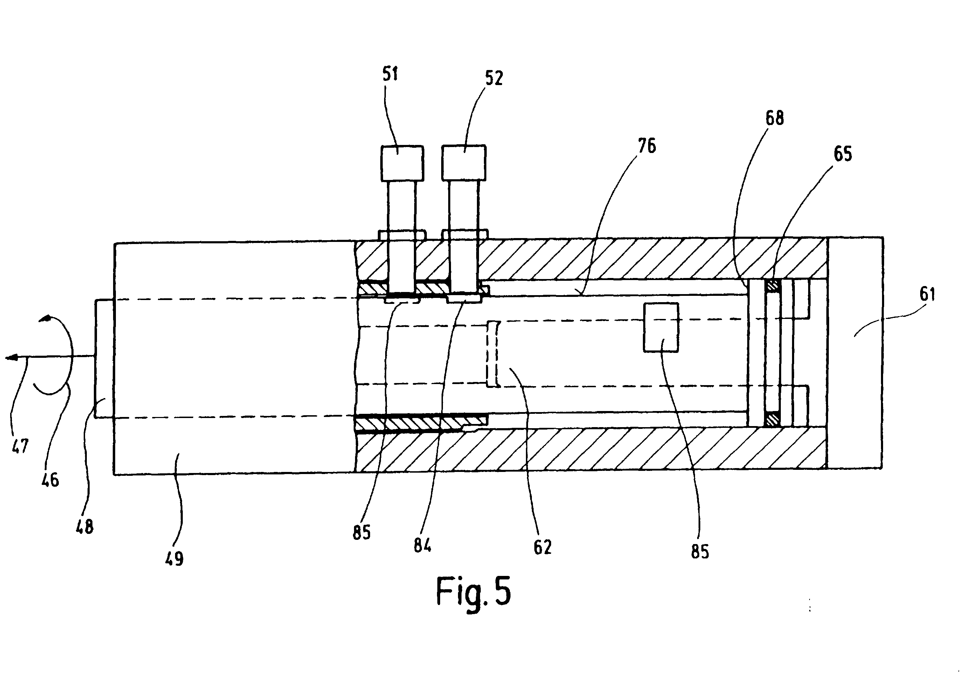

In Fig. 5 ist in einer Darstellung wie Fig. 3 noch gezeigt, wie die Sensoren 51, 52 mit Ausfräsungen 84, 85 zusammenwirken, die auf der Umfangsfläche 76 des Kolbens 48 angeordnet sind. Die Ausfräsungen 84, 85 weisen einen axialen Abstand zueinander auf, der der kombinierten Länge der Hubabschnitte 81, 82 entspricht. Ferner haben die beiden Ausfräsungen 84, 85 einen radialen Abstand zueinander, der dem Drehbereich 83 entspricht.

In der in Fig. 5 gezeigten Lage befindet sich die Greiferhand 38 in ihrer Schwenkendlage, die durch den Sensor 52 erkannt wird, unter dem sich jetzt die Ausfräsung 84 befindet. Wird der Kolben 48 jetzt ausgefahren, so ergibt sich über das Zusammenwirken von Nutenstein 79 sowie Steuerkulisse 77 zunächst eine Drehbewegung 83, die mit einer Hubbewegung 81 einhergeht, woraufhin dann noch eine reine Hubbewegung 82 erfolgt. Dadurch gelangt die Ausfräsung 85 unter den Sensor 51, was in Fig. 5 gestrichelt angedeutet ist.

Obwohl die beiden Sensoren 51 und 52 also nebeneinander und bezogen auf den Zylinder 49 auf gleichem Umfang liegen, können sie durch die spezielle Anordnung der beiden Ausfräsungen 84, 85 dennoch sowohl die Hubendlage als auch die Schwenkendlage überwachen.

## Patentansprüche

1. Werkzeugmaschine mit einer Spindel (11) zur Aufnahme eines Bearbeitungswerkzeuges (29) für die Bearbeitung eines Werkstückes (16) und mit einer Vorrichtung (17) zum Einspannen des Werkstückes (16),
dadurch gekennzeichnet,
daß eine automatische Wechselvorrichtung (37) für das Bearbeitungswerkzeug (29) vorgesehen ist, die eine Greiferhand (38) aufweist, die das Bearbeitungswerkzeug (29) hält und es seitlich in einen Werkstückhohlraum (21) so einbringt, daß es dort mit einem von der Spindel (11) getragenen Adapterwerkzeug (32) automatisch kuppelbar ist.

2. Werkzeugmaschine nach Anspruch 1, dadurch gekennzeichnet, daß die Greiferhand (38) zwei Backen (39) aufweist, die das Bearbeitungswerkzeug (32) in axialer Richtung halten.

3. Werkzeugmaschine nach Anspruch 2, dadurch gekennzeichnet, daß die Greiferhand (38) überdrückbare Rastmittel (58) zum Halten des Bearbeitungswerkzeuges (29) aufweist.

4. Werkzeugmaschine nach Anspruch 3, dadurch gekennzeichnet, daß die Rastmittel (58) zwei Kugelrastungen umfassen, die einander gegenüberliegend innen an den Backen (39) angeordnet sind.

5. Werkzeugmaschine nach einem der Ansprüche 1 bis 4, dadurch gekennzeichnet, daß an der Greiferhand (38) ein Sensor (54) angeordnet ist, der erkennt, ob das Bearbeitungswerkzeug (29) korrekt in der Greiferhand (38) aufgenommen ist.

6. Werkzeugmaschine nach einem der Ansprüche 1 bis 5, dadurch gekennzeichnet, daß die Greiferhand (38) an einem Haltearm (44) angeordnet ist, der die aus dem Werkstück (16) zurückgezogene Greiferhand (38) aus dem Bereich der Vorrichtung (17) nach oben schwenkt.

7. Werkzeugmaschine nach Anspruch 6, dadurch gekennzeichnet, daß der Haltearm (44) an einem Hub-Schwenkantrieb (45) angeordnet ist, der den Haltearm (44) während eines Abschnittes (81) seines Hubes (47) zusätzlich zwangsgeführt nach oben schwenkt (46).

8. Werkzeugmaschine nach Anspruch 7, dadurch gekennzeichnet, daß an dem Hub-Schwenkantrieb (45) zumindest ein Sensor (51) zur Überwachung der Hubendlage und ein Sensor (52) zur Überwachung der Schwenkendlage vorgesehen sind.

9. Werkzeugmaschine nach einem der Ansprüche 7 oder 8, dadurch gekennzeichnet, daß der Hub-Schwenkantrieb (45) einen mit dem Haltearm (44) verbundenen Kolben (48) umfaßt, der drehbar und verschiebbar in einem Zylinder (49) sitzt, wobei der Kolben (48) auf seiner Umfangsfläche (76) eine Steuerkulisse (77) in Form einer nach außen offenen Nut (78) aufweist, in die ein Nutenstein (79) eingreift, der mit dem Zylinder (49) verbunden ist.

10. Werkzeugmaschine nach Anspruch 9, dadurch gekennzeichnet, daß auf der Umfangsfläche (76) des Kolbens (48) zwei axial und radial zueinander versetzte Ausfräsungen (84, 85) angeordnet sind, von denen die erste (85) in der Hubendlage und die zweite (84) in der Schwenkendlage jeweils mit einem zugeordneten Sensor (52, 51) zusammenwirkt.

## Claims

1. A machine tool having a spindle (11) for receiving a machining tool (29) for machining a workpiece (16), and having a mechanism (17) for clamping the workpiece (16),
characterized in that
an automatic changing mechanism (37) for the machining tool (29) is provided, said changing mechanism having a gripper hand (38) that carries the machining tool (29) and introduces the machining tool laterally into a workpiece cavity (21), such that it can be coupled there automatically to an adapter tool (32) carried by the spindle (11).

2. The machine tool of claim 1, characterized in that the gripper hand (38) has two jaws (39) which hold the machining tool (32) in axial direction.

3. The machine tool of claim 2, characterized in that the gripper hand (38) comprises overrunnable snap-lock means (58) for holding the machining tool (29).

4. The machine tool of claim 3, characterized in that the snap-lock means (58) comprise two ball catches which are arranged opposite one another internally on the jaws (39).

5. The machine tool of any of claims 1 - 4, characterized in that a sensor (54) is arranged on the gripper hand (38), the sensor detecting whether the machining tool (29) is correctly received in the gripper hand (38).

6. The machine tool of any of claims 1 - 5, characterized in that the gripper hand (38) is arranged on a retaining arm (44) which pivots the gripper hand (38), once pulled back out of the workpiece (16), upwards out of the region of the mechanism (17).

7. The machine tool of claim 6, characterized in that the retaining arm (44) is arranged at the linear/pivot drive (45) which additionally pivots the retaining arm (44) upwards during one segment (81) of its stroke (47) in constrainedly guided fashion.

8. The machine tool of claim 7, characterized in that at the linear/pivot drive (45) at least one sensor (51) for monitoring the linear end position and a sensor (52) for monitoring the pivoted end position are provided.

9. The machine tool of any of claims 7 or 8, characterized in that the linear/pivot drive (45) comprises a piston (48), joined to the retaining arm (44), which sits rotatably and displaceably in a cylinder (49), the piston (48) having on its circumferential surface (76) a control gate (77) in the form of an externally open groove (78) into which engages a slide block (79) which is joined to the cylinder (49).

10. The machine tool of claim 9, characterized in that on the circumferential surface (76) of the piston (48) there are arranged two counter sunk recesses (84, 85), axially and radially offset from one another, the first (85) of which coacts in the linear end position and the second (84) coacts in the pivoted end position with an associated sensor (52, 51), respectively.

## Revendications

1. Machine-outil comportant une broche (11) destinée à recevoir un outil d'usinage (29) pour l'usinage d'une pièce (16) et comportant un dispositif (17) pour le serrage de la pièce (16),
caractérisée
en ce qu'il est prévu un dispositif d'échange automatique (37) pour l'outil d'usinage (29), ledit dispositif comportant une main de préhension (38), laquelle maintient l'outil d'usinage (29), et l'introduit latéralement dans une cavité (21), de la pièce (16) de manière que l'outil d'usinage (29) puisse y être automatiquement accouplé avec un outil d'adaptation (32) porté par la broche (11).

2. Machine-outil selon la revendication 1,
caractérisée en ce que la main de préhension (38) comporte deux mâchoires (39) qui maintiennent l'outil d'usinage (32) dans la direction axiale.

3. Machine-outil selon la revendication 2,
caractérisée
en ce que la main de préhension (38) comporte des moyens d'encliquetage (58) qui peuvent être enfoncés pour maintenir l'outil d'usinage (29).

4. Machine-outil selon la revendication 3,
caractérisée
en ce que les moyens d'encliquetage (58) comprennent deux loqueteaux à billes qui sont disposés en vis-à-vis, à l'intérieur des mâchoires (39).

5. Machine-outil selon l'une des revendications 1 à 4,
caractérisée
en ce que sur la main de préhension (38) est disposé un capteur (54) qui reconnaît si l'outil d'usinage (29) est logé correctement dans la main de préhension (38).

6. Machine-outil selon l'une des revendications 1 à 5,
caractérisée
en ce que la main de préhension (38) est disposée sur un bras de maintien (44) qui fait pivoter vers le haut la main de préhension (38) retirée de la pièce (16), à partir de la zone du dispositif (17).

7. Machine-outil selon la revendication 6,
caractérisée
en ce que le bras de maintien (44) est disposé sur un dispositif d'entraînement en levage et pivotement (45) qui, en supplément et de manière guidée à force, fait pivoter vers le haut (46) le bras de maintien (44), pendant une partie (81) de sa course (47).

8. Machine-outil selon la revendication 7,
caractérisée
en ce que sur le dispositif d'entraînement en levage et pivotement (45) sont prévus au moins un capteur (51) pour le contrôle de la position de fin de course et un capteur (52) pour le contrôle de la position de fin de pivotement.

9. Machine-outil selon l'une ou l'autre des revendications 7 ou 8,
caractérisée
en ce que le dispositifs d'entraînement en levage et pivotement (45) comporte un piston (48) relié au bras de maintien (44), qui peut tourner et coulisser dans un cylindre (49), le piston (48) présentant sur sa surface périphérique (76) une coulisse de commande (77), sous la forme d'une rainure (78) ouverte vers l'extérieur, dans laquelle s'engage un coulisseau (79) qui est relié au cylindre (49).

10. Machine-outil selon la revendication 9,
caractérisée
en ce que sur la surface périphérique (76) du piston (46) sont disposés deux fraisages (84, 85) décalés axialement et radialement l'un par rapport à l'autre, dont le premier (85) coopère dans la position de fin de course et le deuxième (84) dans la position de fin de pivotement, avec un capteur (52, 51) associé.
